# EUROPEAN PATENT APPLICATION

(11) **EP 3 751 465 A1**
(43) Date of publication of application: **16.12.2020**
(21) Application number: 19180295.8
(22) Date of filing: 14.06.2019
(51) Int. Cl.: G06N 3/00, G06N 3/08, G08G 1/00

(54) **METHODS, APPARATUSES AND COMPUTER PROGRAMS FOR GENERATING A REINFORCEMENT LEARNING-BASED MACHINE-LEARNING MODEL AND FOR GENERATING A CONTROL SIGNAL FOR OPERATING A VEHICLE**

(71) Applicant: Bayerische Motoren Werke Aktiengesellschaft, 80809 München (DE)
(72) Inventor: Notz, Dominik, Belmont, CA 94002 (US); Windelen, Johannes, Mountain View, CA 94043 (US); Sung, George, San Jose, CA 95131 (US); Werling, Moritz, 80809 München (DE); Ponnaiyan, Vivekananda, Oakland, CA 94605 (US); Mirchevska, Branka, 80993 München (DE)

(57) **Abstract**

Examples relate to methods, apparatuses and computer programs for generating a reinforcement learning-based machine-learning model and for generating a control signal for operating a vehicle. The machine-learning model is suitable for operating the vehicle. The method for generating the reinforcement learning-based machine-learning model comprises providing a reward function for the machine-learning model. The reward function is based on an operating environment the vehicle is to be operated in. The operating environment is based on at least one of a country the vehicle is to be operated in, a legal framework under which the vehicle is to be operated and a vehicle model of the vehicle. The method comprises performing reinforcement learning on the machine-learning model using the reward function. The reinforcement learning is based on a simulation of the vehicle in a vehicular environment.

## Description

### Field

Examples relate to methods, apparatuses and computer programs for generating a reinforcement learning-based machine-learning model and for generating a control signal for operating a vehicle.

### Background

Computer models, such as machine-learning models, of driving behavior can be used in fields of automotive development. In the field of autonomous driving, for example, computer models can play an important role. For example, autonomously driving vehicles can be trained and tested by using computer models in order to eliminate errors before testing the autonomous driving systems under real conditions in traffic. For testing autonomous driving systems, it may be advantageous to develop computer models, which can reproduce a realistic driving behavior of vehicles.

Machine-learning models are often trained using a technique called "supervised learning", in which training input data and training output data is provided to a supervised learning algorithm that is used to train the machine-learning model. Alternatively, a technique called reinforcement learning may be used. Reinforcement learning differs from "standard" supervised learning in that correct input/output pairs need not be presented, and sub-optimal actions need not be explicitly corrected. Instead the focus is on performance, which involves finding a balance between exploration (of uncharted territory) and exploitation (of current knowledge). While the goal in unsupervised learning is to find similarities and differences between data points, in reinforcement learning the goal is to find a suitable action model that would increase the total cumulative reward of the agent. Until now, Reinforcement learning has mostly been researched academically. It was also applied to game theory.

Algorithms currently employed in automated vehicles mainly require hard coded algorithms. Patent US9977430B, on the other hand, describes a method to use reinforcement learning to account for predefined navigational constraints, such as minimal distances to pedestrians, in order to provide the desired navigational action. However, the parameters which influence the Reinforcement Learning (RL) algorithm impact do not change depending on the operating environment of the vehicle. Therefore, the driving of the vehicle may feel unnatural and impersonal, which may lead to dangerous situations in traffic, as other drivers might expect a different driving behavior.

Therefore, there is a desire to provide an improved concept for operating a vehicle, in which a driving behavior of the vehicle seems more natural.

### Summary

Embodiments of the present disclosure are based on the insight, that, in order to provide a more "natural" and "personal" driving experience, instead of using a generic machine-learning model that suits a high number of different operation environments, the machine-learning models that are used for operating a vehicle (such as a car) are tailored to the operating environment they are to be used in. Embodiments of the present disclosure use reinforcement learning to adapt (i.e. "learn") driving policies depending on an operational environment of the vehicle, e.g. based on vehicle model (i.e. car model), country and legislation. In order to learn the driving policies, reinforcement learning may be used to set parameters concerning driving policy. These parameters would then influence the automaton's actions. For example, a parameter influencing lane changing habits could be adapted by reinforcement learning. However, the definition of a desirable driving policy varies depending on vehicle model, country, and legislation. For example, changing lanes to be in a slower lane is considered to be more important in Germany than in the United States, as the difference in speed between vehicles is usually far greater. Thus, a German driver may consider a lane change reasonable, even when an overtaking maneuver will soon be required, whereas an American would not change to the right lane in the same driving scenario. Such differences also occur between drivers of different vehicle models, and of course drivers with differing legislatures (i.e. legal frameworks). In order to improve driver comfort and driver satisfaction, and to provide a more natural driving experience, automated control of vehicles may adapt to such differences in driving policy. Achieving such distinctions is possible with reinforcement learning, as different driving policies may be associated with different reward functions. In one instantiation of this invention a large, luxury Sports Utility Vehicle (SUV) like the BMW X7 sold in the United States would have different parameters preset in its automated driving function than a sedan, like a BMW 1 Series, sold in Germany. Therefore, the driving policy may be adapted to vehicle model, country and/or legislation, e.g. by specifying different reward functions for the respective RL-based models. This may lead to a more natural behavior of the vehicle, thus increasing safety of the vehicle, increased comfort and increased satisfaction for customers.

Embodiments of the present disclosure provide a method for generating a reinforcement learning-based machine-learning model. The machine-learning model is suitable for operating a vehicle. The method comprises providing a reward function for the machine-learning model, the reward function being based on an operating environment the vehicle is to be operated in. The operating environment is based on at least one of a country the vehicle is to be operated in, a legal framework under which the vehicle is to be operated and a vehicle model of the vehicle. The method comprises performing reinforcement learning on the machine-learning model using the reward function. The reinforcement learning is based on a simulation of the vehicle in a vehicular environment. Embodiments further provide a corresponding apparatus comprising a processing module that is configured to execute the method.

In at least some embodiments, the reward function comprises a plurality of reward function components being categorized in a plurality of categories. The plurality of categories may comprise two or more categories of the group of legal constraints, safety preferences, speed preferences, comfort preferences and energy use preferences. By using a plurality of components that are categorized in the plurality of categories, an adjustment of the reward function based on the operating environment may be facilitated.

For example, the plurality of reward function components may be adapted to the operating environment the vehicle is to be operated in. This may enable the adaptation of the overall reward function.

In some embodiments, the reinforcement learning may be performed on an initially untrained machine-learning model. This may enable incorporating more vehicle-specific parameters in the training of the machine-learning model, such as e.g. simulated sensor data that is based on the actual sensors of the vehicle.

Alternatively, the reinforcement learning may be performed on a pre-trained machine-learning model. The pre-trained machine-learning model may be pre-trained to accommodate different operating environments. This may enable re-using the bulk of the reinforcement learning, e.g. by using a pre-trained machine-learning model that functions well within the traffic rules, but lacks operation environment-specific adjustments.

In at least some embodiments, the pre-trained machine-learning model may be pre-trained using reinforcement learning. This may enable a joint usage of the reward function of the pre-trained machine-learning model and of the reward function that is based on the operating environment.

Alternatively, the pre-trained machine-learning model may be pre-trained using supervised learning. This may enable an adaptation of machine-learning models that are "conventionally" trained or generated using rule-based approaches.

In at least some embodiments, the machine-learning model may be suitable for controlling a lane-changing behavior and/or an overtaking behavior of the vehicle. The lane-changing behavior and the overtaking behavior may be different in different countries, e.g. depending on whether a more relaxed or a more energetic driving style is prevalent in the country.

Additionally or alternatively, the machine-learning model may be suitable for controlling a steering behavior, an acceleration behavior and/or a deceleration behavior of the vehicle. These parameters also depend on whether a more relaxed or a more energetic driving style is prevalent in the country, but also depend on whether the vehicle is more akin to sports car or a family car.

In at least some embodiments, the simulation of the vehicle in the vehicular environment is based on a one or more simulated input parameters related to the vehicular environment of the vehicle. The one or more simulated input parameters may reflect a driving situation the vehicle is in. By simulating the vehicular environment, the machine-learning model may learn a way to operate the vehicle in the vehicular environment.

For example, the one or more simulated input parameters may comprise simulated sensor data of perception sensors of the vehicle. This may enable a usage of the machine-learning model on a low level, which may provide a better focus on the specifics of the vehicle, while likely requiring a longer reinforcement learning-based training.

Alternatively or additionally, the one or more simulated input parameters may comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle. This may enable a usage of the machine-learning model on a high level, so that a pre-trained machine-learning model may be used that focuses on the low-level functionality, while still being able to influence the relevant driving policy features that make the driving of the vehicle feel natural.

Embodiments of the present disclosure further provide a method for generating a control signal for operating a vehicle. The method comprises obtaining one or more input parameters from one or more input sources. The method comprises providing the one or more input parameters to a machine-learning model to obtain one or more output values. The machine-learning model is a reinforcement learning-based machine-learning model being suitable for operating the vehicle. The machine-learning model is based on a reward function. The reward function is based on an operating environment the vehicle is to be operated in. The operating environment is based on at least one of a country the vehicle is to be operated in, a legal framework under which the vehicle is to be operated and a vehicle model of the vehicle. The one or more input parameters reflect a driving situation the vehicle is in. The one or more output values indicate a driving maneuver to be carried out by the vehicle in response to the driving situation. The method comprises generating the control signal based on the one or more output values.

In some embodiments, the plurality of input parameters comprise sensor data of perception sensors of the vehicle. Alternatively, the plurality of input parameters comprise one or more elements of positional data of the vehicle and of one or more further vehicles surrounding the vehicle, velocity data of the vehicle and of one or more further vehicles surrounding the vehicle, and static mapping data of features of the environment of the vehicle. Again, either a low level or a high level approach may be chosen.

Embodiments of the present disclosure further provide a computer program having a program code for performing at least one of the methods, when the computer program is executed on a computer, a processor, or a programmable hardware component.

Embodiments of the present disclosure further provide an apparatus for generating a control signal for operating a vehicle. The apparatus comprises at least one interface for obtaining one or more input parameters from one or more input sources. The apparatus comprises a processing module. The processing module is configured to provide the one or more input parameters to a machine-learning model to obtain one or more output values. The machine-learning model is a reinforcement learning-based machine-learning model being suitable for operating the vehicle. The machine-learning model is based on a reward function, the reward function being based on an operating environment the vehicle is to be operated in. The operating environment is based on at least one of a country the vehicle is to be operated in, a legal framework under which the vehicle is to be operated and a vehicle model of the vehicle. The one or more input parameters reflect a driving situation the vehicle is in. The one or more output values indicate a driving maneuver to be carried out by the vehicle in response to the driving situation. The processing module is configured to generate the control signal based on the one or more output values.

### Brief description of the Figures

Some examples of apparatuses and/or methods will be described in the following by way of example only, and with reference to the accompanying figures, in which
Fig. 1 shows a flow chart of an embodiment of a method for generating a reinforcement learning-based machine-learning model;
Fig. 2a shows a flow chart of an embodiment of a method for generating a control signal for operating a vehicle; and
Fig. 2b shows a block diagram of an embodiment of an apparatus for generating a control signal for operating a vehicle.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

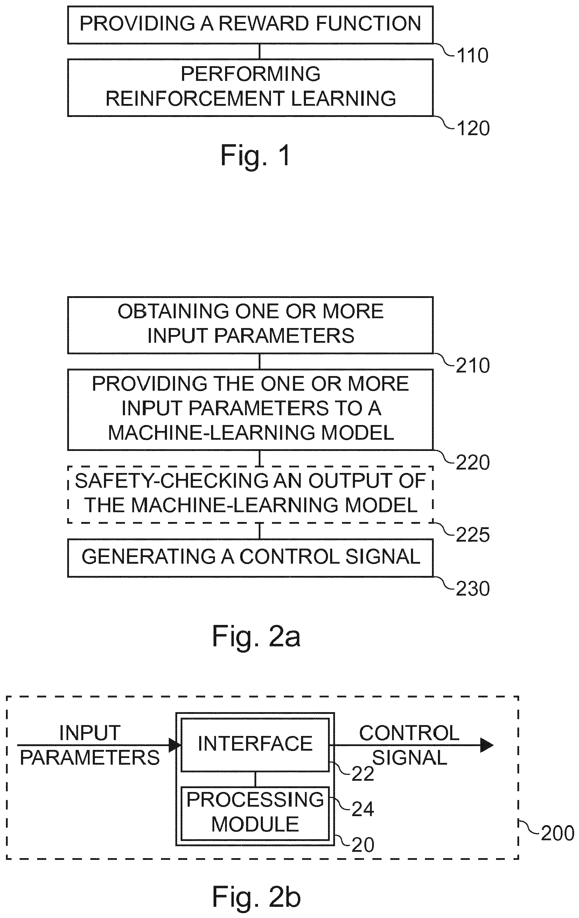

Fig. 1 shows a flow chart of an embodiment of a method for generating a reinforcement learning-based machine-learning model. The machine-learning model is suitable for operating a vehicle. The method comprises providing 110 a reward function for the machine-learning model, the reward function being based on an operating environment the vehicle is to be operated in. The operating environment is based on at least one of a country the vehicle is to be operated in, a legal framework under which the vehicle is to be operated and a vehicle model of the vehicle. The method comprises performing 120 reinforcement learning on the machine-learning model using the reward function. The reinforcement learning is based on a simulation of the vehicle in a vehicular environment. For example, the method may be executed by a computer, i.e. the method may be a computer-implemented method.

Embodiments provide a method for generating a reinforcement learning-based machine-learning model that is suitable for operating a vehicle. Contrary to previous attempts at training machine-learning models to be used for operating a vehicle, the machine-learning model being generated in the present disclosure is being trained with a focus on the operating environment of the vehicle. To achieve this, a so-called "reward function" of the reinforcement learning is tailored to the specific environment. For each operating environment, a separate machine-learning model may be generated. For example, if a plurality of operating environment are distinguished, a plurality of machine-learning models may be generated, one for each operating environment.

Embodiments apply Reinforcement Learning (RL) to learn driving policy in automated driving. Reinforcement learning is a machine-learning technique for training machine-learning models. In general, machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. Apart from supervised or semi-supervised learning, unsupervised learning may be used to train the machine-learning model. In unsupervised learning, (only) input data might be supplied, and an unsupervised learning algorithm may be used to find structure in the input data, e.g. by grouping or clustering the input data, finding commonalities in the data.

Reinforcement learning, which is used in embodiments, is a third group of machine-learning algorithms. In other words, reinforcement learning is used to train the machine-learning model. In reinforcement learning, one or more software actors (called "software agents") are trained to take actions in an environment, in this case the vehicular environment. Based on the taken actions, a reward is calculated according to a reward function. The actions are based on a policy, a policy being a function that returns an action for a given state. Reinforcement learning is based on training the one or more software agents to choose the actions such, that the cumulative reward is increased, leading to software agents that become better at the task they are given (as evidenced by the increasing rewards). The reward function is used to calculate the cumulative reward, e.g. the reward that is gained based on all of the actions taken by the one or more software agents. For example, the reward of an action may be positive, e.g. if a rule of the reward function is fulfilled in a favorable manner, or negative (or less positive), if a rule of the reward function is violated. In embodiments, the one or more software agents may model the behavior of the vehicle in the vehicular environment (during the simulation). Accordingly, the one or more software agents may control vehicular functions in the simulation of the vehicle, such as a lane-changing behavior of the vehicle, an overtaking behavior of the vehicle, a steering behavior of the vehicle, an acceleration behavior of the vehicle and/or a deceleration behavior of the vehicle. The one or more software agents may thus model the autonomous driving of the vehicle.

In embodiments, reinforcement learning is performed on the machine-learning model using the reward function. For example, the reward function may comprise multiple components, which are used to judge the actions taken by the one or more software agents. In other words, the reward function may comprise a plurality of reward function components being categorized in a plurality of categories. In this case, the reward function may be or be based on a (weighted) combination of the individual reward functions of the plurality of reward function components. The plurality of reward function components may comprise a plurality of mathematical functions that are used to judge the actions taken by the one or more software agents in a given state. In other words, the reward function (as well as its sub-components) is a function of both action and state (reward = f(state, action)). For example, the plurality of categories may comprise two or more categories (e.g. three or more, four or more, all five) of the group of legal constraints, safety preferences, speed preferences, comfort preferences and energy use preferences. For example, a reward function component of the category of legal constraints may judge an action based on a maximal allowed velocity or a minimal allowed following distance etc. A reward function component of the category of safety preferences may judge an action based on a maximal allowed velocity, a maximal desired velocity difference to the maximal allowed velocity, a minimal desired following distance, a minimal desired side distance to other vehicles or infrastructure etc. A reward function component of the category of speed preferences may judge an action based on a maximal allowed velocity, a maximal desired velocity difference to the maximal allowed velocity, a minimally desired travelling velocity etc. A reward function component of the category of comfort preferences may judge an action based on a number of accelerations or decelerations, based on an accelerative or decelerative force of the accelerations or decelerations, or based on a number of lane changes or overtaking maneuvers etc. A reward function component of the category of energy use may judge an action based on an energy consumption the vehicle incurs when the action is performed. Different reward function components may be weighted differently.

The reward function is based on an operating environment the vehicle is to be operated in which is in turn based on at least one of a country the vehicle is to be operated in, a legal framework under which the vehicle is to be operated and a vehicle model of the vehicle. For example, the operating environment may be defined by a combination of the factors: For example, the operating environment may be defined by a combination of a vehicle model (or a group of vehicle models) and a country (or a group of countries) the vehicle model is to be operated in. For example, the operating environment may be defined by a single vehicle model to be operated in Germany or the United States, or by a group of vehicle models (e.g. sports cars or compact cars) to be operated in a group of countries (e.g. western Europe). Furthermore, the legal framework may be considered. For example, in some countries, different regions, such as counties or states, have different legal frameworks. In this case, the operating environment may be defined by a combination of a vehicle model (or a group of vehicle models), a country (or a group of countries) the vehicle model is to be operated in, and a legal framework under which the vehicle is to be operated. Alternatively, the operating environment may be defined by a single factor, e.g. the operating environment may be defined (only) by the vehicle model of the vehicle, the operating environment may be defined (only) by the country the vehicle is to be operated in, or the operating environment may be defined (only) by a legal framework under which the vehicle is to be operated.

When using a plurality of reward function components, the plurality of reward function components may be adapted to the operating environment the vehicle is to be operated in. For example, reward function components of the category of legal constraints may be adapted to the country the vehicle is to be operated in and/or to the legal framework under which the vehicle is to be operated. Reward function components of the category of safety preferences may be adapted to the country the vehicle is to be operated in (e.g. based on whether drivers of the particular country are likely to prefer larger or smaller safety distances), to the legal framework under which the vehicle is to be operated (e.g. based on minimal following or side distances allowed under the legal framework) or to the vehicle model (e.g. using different safety preferences in a family car and in a sports car).The reward function components of the category of speed preferences may be adapted to the country the vehicle is to be operated in (e.g. based on whether drivers of the particular country are likely to prefer stable driving speeds or to prefer maximizing their velocity in the short term), to the legal framework under which the vehicle is to be operated (e.g. based on maximal allowed velocity) or to the vehicle model (e.g. using different speed preferences in a family car and in a sports car). The reward function components of the category of comfort preferences may be adapted to the vehicle model (e.g. using different comfort preferences in a family car and in a sports car). Finally, the reward function components of the category of speed preference may be adapted to the country the vehicle is to be operated in (e.g. based on a price and availability of energy sources, such as gasoline, diesel or electric energy), to the legal framework under which the vehicle is to be operated (e.g. based on maximal allowed energy use of the vehicle) or to the vehicle model (e.g. using different energy use preferences in a family car and in a sports car). In summary, the reward function components may be adapted to the country the vehicle is to be operated in, the legal framework the vehicle is to be operated under, or the vehicle model of the vehicle. In other words, the (resulting reward function may be country specific, vehicle model-specific or legal framework-specific (or a combination thereof).

The reinforcement learning is based on a simulation of the vehicle in a vehicular environment. In the simulation of the vehicle, the one or more software agents may be tasked with reaching a high cumulative reward (based on the reward function) in various driving situations. In other words, the machine-learning model may be exposed to a plurality of driving situations. In each driving situation, reinforcement learning may be used to determine an optimal approach to handling the driving situation, e.g. by simulating different approaches to handling the driving situations. The one or more software agents may be able to control the lane-changing behavior of the vehicle, the overtaking behavior of the vehicle, the steering behavior of the vehicle, the acceleration behavior of the vehicle and/or the deceleration behavior of the vehicle, to generate the different approaches to handling the driving situations. Accordingly, the machine-learning model may be suitable for controlling at least one of the lane-changing behavior of the vehicle, the overtaking behavior of the vehicle, the steering behavior of the vehicle, the acceleration behavior of the vehicle and/or the deceleration behavior of the vehicle. For example, the machine-learning model may be suitable for setting parameters concerning driving policy. The one or more software agents may operate (i.e. steer) the vehicle in the various driving situations.

The lane-changing behavior of the vehicle may refer to the likeliness of the vehicle to perform a lane change. Accordingly, the lane-changing behavior may be based on a distance and velocity relative to a preceding vehicle, the preceding vehicle being likely to trigger an additional lane change and/or based on a distance and/or velocity relative to a succeeding vehicle. For example, if a vehicle is on a lane that is used for overtaking and is likely to overtake a preceding vehicle within 20 seconds, but a succeeding vehicle is due to overtake the vehicle in 5 seconds, at least in some countries, a lane change of the vehicle in the middle may be mandated. The lane-changing behavior may model the conditions that are required for a vehicle to decide whether to change the lane (e.g. in such a situation as laid above). Similarly, the overtaking behavior of the vehicle may model the conditions that are required for a vehicle to decide whether to overtake a preceding vehicle, e.g. based on a distance and velocity relative to the preceding vehicle and/or based on a distance and relative velocity of succeeding vehicle(s). The steering behavior of the vehicle may model at least one of a steering torque and a steering angle, i.e. how steep the angle is that the vehicle uses when changing lanes. The acceleration behavior of the vehicle may model a minimal, average and/or maximal acceleration force (or equivalent) to be used when performing driving maneuvers. The deceleration behavior of the vehicle may model a minimal, average and/or maximal deceleration force (or equivalent) to be used when performing driving maneuvers.

To model the driving situation, simulated input parameters may be provided to the machine. In other words, the simulation of the vehicle in the vehicular environment may be based on a one or more simulated input parameters related to the vehicular environment of the vehicle. The one or more simulated input parameters may reflect a driving situation the vehicle is in. In some embodiments, the one or more simulated input parameters are low-level input parameters, such as simulated sensor data of image sensors or of lidar sensors of the vehicle. In other words, the one or more simulated input parameters may comprise simulated sensor data of perception sensors (such as camera sensors, lidar sensors or ultrasound sensors) of the vehicle. In this case, the reinforcement learning algorithm may be tasked with determining how to operate the vehicle in the driving situation based on the simulated sensor data of the perception sensors of the vehicle.

Alternatively or additionally, a higher-level simulation may be performed, e.g. by not providing the sensor data, but by abstracting from the sensor data to obtain the relevant parameters, such as distances between vehicles, position on the road etc. Accordingly, the one or more simulated input parameters may comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle. This information may reflect the driving situation the vehicle is in, e.g. by modeling a position of the vehicle relative to surrounding vehicles and/or relative to features (such as the road, infrastructure) of the environment of the vehicle. Based on the one or more simulated input parameters, the reinforcement learning algorithm may determine the optimal approach to the driving situation.

In some embodiments, the machine-learning model may be generated from scratch, e.g. by starting with an "empty" or initially untrained machine-learning model. For example, the reinforcement learning may be performed 120 on an initially untrained machine-learning model. In some embodiments, a machine-learning model may be deemed initially untrained if merely auxiliary function, such as sensor input or image analysis, are included in the machine-learning model

Alternatively, the reinforcement learning may be performed 120 on a pre-trained machine-learning model. The pre-trained machine-learning model may be pre-trained to accommodate different operating environments. For example, pre-trained machine-learning model may be pre-trained to accommodate different car models, different countries and/or different legal frameworks. In some embodiments, the pre-trained machine-learning model may be pre-trained using reinforcement learning. Alternatively, the pre-trained machine-learning model may be pre-trained using supervised learning.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g. based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

In the following, a further method, apparatus and computer program is shown. This method, apparatus and computer program may apply the machine-learning model generated above in the actual operation of a vehicle.

Fig. 2a shows a flow chart of an embodiment of a method for generating a control signal for operating a vehicle. The method comprises obtaining 210 one or more input parameters from one or more input sources. The method further comprises providing 220 the one or more input parameters to a machine-learning model to obtain one or more output values. The machine-learning model is a reinforcement learning-based machine-learning model being suitable for operating the vehicle. The machine-learning model is based on a reward function. The reward function is based on an operating environment the vehicle is to be operated in. The operating environment is based on at least one of a country the vehicle is to be operated in, a legal framework under which the vehicle is to be operated and a vehicle model of the vehicle. The one or more input parameters reflect a driving situation the vehicle is in. The one or more output values indicate a driving maneuver to be carried out by the vehicle in response to the driving situation. The method further comprises generating 230 the control signal based on the one or more output values. For example, the method may be executed by the vehicle, e.g. by a processing module of the vehicle.

Fig. 2b shows a block diagram of an embodiment of a (corresponding) apparatus 20 for generating a control signal for operating a vehicle 200. The apparatus 20 comprises at least one interface 22 for obtaining one or more input parameters from one or more input sources. The apparatus 20 further comprises a processing module 24 that is coupled to the at least one interface 22. The processing module 24 may be configured to execute the method of Fig. 2a, e.g. in conjunction with the at least one interface 22. For example, the processing module 24 is configured to provide the one or more input parameters to a machine-learning model to obtain one or more output values. The processing module 24 is further configured to generate the control signal based on the one or more output values. Fig. 2b further shows the vehicle 200 comprising the apparatus 20.

The method, apparatus and computer program for generating the control signal for operating the vehicle 200 is targeted at the vehicle 200, e.g. by specifying how the machine-learning model generated by the method or computer program of Fig. 1 may be used in the vehicle 200. Accordingly, the machine-learning model may correspond to the reinforcement learning-based machine-learning model introduced in connection with Fig. 1. The machine-learning model is used to generate the one or more output values based on the one or more input parameters. The output values are in turn used to generate the control signal, which is suitable for operating the vehicle. In this context, the term "operating the vehicle" may correspond to steering the vehicle, but may also correspond to "triggering certain actions and/or certain maneuvers in the vehicle". In other words, the control signal may be suitable for triggering one or more actions and/or one or more driving maneuvers of the vehicle, such as an acceleration, a deceleration, a lane change maneuver or an overtaking maneuver. Accordingly, the one or more output values may comprise information on one or more actions and/or one or more driving maneuvers of the vehicle to be taken in response to the one or more input parameters.

In some embodiments, a safety check may be used when generating the control signal, e.g. to avoid situations in which the output of the machine-learning model would lead to potentially dangerous situations. For example, if there was a vehicle on the left side next to us and for some reason the machine-learning model outputs to perform a left lane change this safety check (or safety module) may prevent the left lane change and choose a safe alternative (e.g. stay on lane) instead. In other words, the method may comprise safety-checking 225 the output of the machine-learning model, e.g. based on the one or more input parameters. For example, the safety-checking of the output of the machine-learning model may comprise using the output of the machine-learning model for the generation of the control signal of the output of the machine-learning model (would) yield(s) a safe driving situation, and overriding the output of the machine-learning model if the output of the machine-learning model (would) yield(s) an unsafe driving situation. The control signal may be generated based on the safety-checked output of the machine-learning model.

In the description of the method of Fig. 1, simulated input parameters were used in the simulation of the vehicle during the reinforcement learning process. The one or more input parameters used in the present method, apparatus and/or computer programs correspond to these simulated input parameters. Accordingly, the plurality of input parameters may comprise sensor data of perception sensors (such as a camera, a lidar sensor or an ultrasound sensor) of the vehicle. Additionally or alternatively, the plurality of input parameters may comprise one or more elements of positional data of the vehicle and of one or more further vehicles surrounding the vehicle, velocity data of the vehicle and of one or more further vehicles surrounding the vehicle, and static mapping data of features of the environment of the vehicle. For example, the method may comprise obtaining the one or more input parameters from one or more sensors or devices of the vehicle (e.g. from one or more perception sensors or from an autonomous driving system of the vehicle).

The at least one interface 22 may correspond to one or more inputs and/or outputs for receiving and/or transmitting information, which may be in digital (bit) values according to a specified code, within a module, between modules or between modules of different entities. For example, the at least one interface 22 may comprise interface circuitry configured to receive and/or transmit information.

In embodiments the processing module 24 may be implemented using one or more processing units, one or more processing devices, any means for processing, such as a processor, a computer or a programmable hardware component being operable with accordingly adapted software. In other words, the described function of the processing module 24 may as well be implemented in software, which is then executed on one or more programmable hardware components. Such hardware components may comprise a general purpose processor, a Digital Signal Processor (DSP), a micro-controller, etc.

More details and aspects of the method or apparatus are mentioned in connection with the proposed concept or one or more examples described above (e.g. Fig. 1). The method may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded. Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. Method for generating a reinforcement learning-based machine-learning model, the machine-learning model being suitable for operating a vehicle, the method comprising:
Providing (110) a reward function for the machine-learning model, the reward function being based on an operating environment the vehicle is to be operated in, wherein the operating environment is based on at least one of a country the vehicle is to be operated in, a legal framework under which the vehicle is to be operated and a vehicle model of the vehicle; and
Performing (120) reinforcement learning on the machine-learning model using the reward function, wherein the reinforcement learning is based on a simulation of the vehicle in a vehicular environment.

2. The method according to claim 1, wherein the reward function comprises a plurality of reward function components being categorized in a plurality of categories, the plurality of categories comprising two or more categories of the group of legal constraints, safety preferences, speed preferences, comfort preferences and energy use preferences.

3. The method according to claim 2, wherein the plurality of reward function components are adapted to the operating environment the vehicle is to be operated in.

4. The method according to one of the claims 1 to 3, wherein the reinforcement learning is performed (120) on an initially untrained machine-learning model.

5. The method according to one of the claims 1 to 3, wherein the reinforcement learning is performed (120) on a pre-trained machine-learning model, wherein the pre-trained machine-learning model is pre-trained to accommodate different operating environments.

6. The method according to claim 5, wherein the pre-trained machine-learning model is pre-trained using reinforcement learning.

7. The method according to claim 5, wherein the pre-trained machine-learning model is pre-trained using supervised learning.

8. The method according to one of the claims 1 to 7, wherein the machine-learning model is suitable for controlling a lane-changing behavior and/or an overtaking behavior of the vehicle.

9. The method according to one of the claims 1 to 8, wherein the machine-learning model is suitable for controlling a steering behavior, an acceleration behavior and/or a deceleration behavior of the vehicle.

10. The method according to one of the claims 1 to 9, wherein the simulation of the vehicle in the vehicular environment is based on one or more simulated input parameters related to the vehicular environment of the vehicle, wherein the one or more simulated input parameters reflect a driving situation the vehicle is in.

11. The method according to claim 10, wherein the one or more simulated input parameters comprise simulated sensor data of perception sensors of the vehicle,
or wherein the one or more simulated input parameters comprise one or more elements of simulated positional data of the vehicle and of one or more further vehicles surrounding the vehicle, simulated velocity data of the vehicle and of one or more further vehicles surrounding the vehicle, and static mapping data of features of the environment of the vehicle.

12. A method for generating a control signal for operating a vehicle, the method comprising:
Obtaining (210) one or more input parameters from one or more input sources;
Providing (220) the one or more input parameters to a machine-learning model to obtain one or more output values,
wherein the machine-learning model is a reinforcement learning-based machine-learning model being suitable for operating the vehicle,
wherein the machine-learning model is based on a reward function, the reward function being based on an operating environment the vehicle is to be operated in, wherein the operating environment is based on at least one of a country the vehicle is to be operated in, a legal framework under which the vehicle is to be operated and a vehicle model of the vehicle,
wherein the one or more input parameters reflect a driving situation the vehicle is in and wherein the one or more output values indicate a driving maneuver to be carried out by the vehicle in response to the driving situation; and
Generating (230) the control signal based on the one or more output values.

13. The method according to claim 12, wherein the plurality of input parameters comprise sensor data of perception sensors of the vehicle,
or wherein the plurality of input parameters comprise one or more elements of positional data of the vehicle and of one or more further vehicles surrounding the vehicle, velocity data of the vehicle and of one or more further vehicles surrounding the vehicle, and static mapping data of features of the environment of the vehicle.

14. A computer program having a program code for performing at least one of the methods according to one of the previous claims, when the computer program is executed on a computer, a processor, or a programmable hardware component.

15. An apparatus (20) for generating a control signal for operating a vehicle (200), the apparatus comprising:
at least one interface (22) for obtaining one or more input parameters from one or more input sources; and
a processing module (24) configured to:
Provide the one or more input parameters to a machine-learning model to obtain one or more output values,
wherein the machine-learning model is a reinforcement learning-based machine-learning model being suitable for operating the vehicle,
wherein the machine-learning model is based on a reward function, the reward function being based on an operating environment the vehicle is to be operated in, wherein
the operating environment is based on at least one of a country the vehicle is to be operated in, a legal framework under which the vehicle is to be operated and a vehicle model of the vehicle,
wherein the one or more input parameters reflect a driving situation the vehicle is in and wherein the one or more output values indicate a driving maneuver to be carried out by the vehicle in response to the driving situation, and
Generate the control signal based on the one or more output values.
